# FASCICULE DE BREVET EUROPEEN

(11) **EP 1 529 068 B1**
(45) Date de publication et mention de la délivrance du brevet: **21.01.2009**
(21) Numéro de dépôt: 03756534.8
(22) Date de dépôt: 07.08.2003
(51) Int. Cl.: C08F 214/18

(54) **POLYMERES FLUORES**
FLUORPOLYMER
FLUORINATED POLYMERS,

(30) Priorité: 09.08.2002 FR 0210159
(43) Date de publication de la demande: 11.05.2005
(73) Titulaire: COMMISSARIAT A L'ENERGIE ATOMIQUE, 75015 Paris (FR)
(72) Inventeur: MARSACQ, Didier, F-38000 GRENOBLE (FR); PINERI, Michel, F-38330 MONTBONNOT (FR); AMEDURI, Bruno, F-34000 MONTPELLIER (FR); SOUZY, Renaud, F-69210 Saint Germain sur L'Arbresle (FR)
(74) Mandataire: Poulin, Gérard
(86) Numéro de dépôt international: PCT/FR2003/002485
(87) Numéro de publication internationale: WO 2004/016665

(56) Documents cités:
- EP-A- 1 172 382
- WO-A-96/40798
- US-A- 5 834 523

## Description

### DOMAINE TECHNIQUE

La présente invention a trait à des polymères comprenant des motifs répétitifs fluorés aromatiques et des motifs fluorés aliphatiques, et leur procédé de préparation.

Ces polymères, possédant d'excellentes propriétés physicochimiques, telles que la conductivité protonique et la stabilité chimique, trouvent en particulier leur application dans la préparation de membranes échangeuses d'ions, destinées aux piles à combustible, fonctionnant notamment à des hautes températures, telles que des températures s'échelonnant de 120 à 140°C.

Par conséquent, le domaine de l'invention est également celui des membranes préparées avec lesdits polymères et celui des dispositifs de pile à combustible à électrolyte solide comprenant au moins une de ses membranes.

Le domaine de l'invention peut être défini comme celui des piles à combustible, et plus particulièrement des piles à combustible ayant une membrane comme électrolyte tels que les piles PEMFC (« Proton Exchange Membrane Fuel Cell » pour Pile à combustible à membrane échangeuse de protons) et DMFC (« Direct Methanol Fuel Cell » pour Pile à combustible directe au méthanol).

### ETAT DE LA TECHNIQUE ANTERIEURE

Une pile à combustible comporte, généralement, un empilement de cellules élémentaires, au sein desquelles a lieu une réaction électrochimique entre deux réactifs qui sont introduits de manière continue. Le combustible, tel que l'hydrogène, pour les piles fonctionnant avec des mélanges hydrogène/oxygène (PEMFC), ou le méthanol pour des piles fonctionnant avec des mélanges méthanol/oxygène (DMFC), est amené au contact de l'anode, alors que le comburant, généralement l'oxygène, est amené au contact de la cathode. L'anode et la cathode sont séparées par un électrolyte, de type membrane échangeuse d'ions. La réaction électrochimique, dont l'énergie est convertie en énergie électrique, se scinde en deux demi-réactions :
- une oxydation du combustible, se déroulant à l'interface anode/électrolyte produisant, dans le cas des piles à hydrogène des protons H+, qui vont traverser l'électrolyte en direction de la cathode, et des électrons, qui rejoignent le circuit extérieur, afin de concourir à la production d'énergie électrique ;
- une réduction du comburant, se déroulant à l'interface électrolyte/cathode, avec production d'eau, dans le cas des piles à hydrogène.

La réaction électrochimique a lieu, à proprement parler, au niveau d'un assemblage électrode-membrane-électrode.

L'assemblage électrode-membrane-électrode est un assemblage très mince d'une épaisseur de l'ordre du millimètre et chaque électrode est alimentée par l'arrière, par les gaz par exemple à l'aide d'une plaque cannelée.

Les densités de puissance obtenues par un tel assemblage et qui sont généralement de l'ordre de 0,5 à 2 W/cm², dans le cas où l'on met en oeuvre de l'hydrogène et de l'oxygène, nécessitent l'association de plusieurs de ces assemblages électrode -membrane-électrode pour obtenir, par exemple les 50 kW nécessaires à un véhicule électrique standard.

Autrement dit, il est nécessaire d'assembler un nombre important de ces assemblages, dont les surfaces élémentaires peuvent être de l'ordre de 20 x 20 cm², pour obtenir la puissance voulue, notamment dans le cas où la pile à combustible est mise en oeuvre dans un véhicule électrique.

Dans ce but, chaque ensemble formé de deux électrodes et d'une membrane, définissant une cellule élémentaire de la pile à combustible, est ainsi disposé entre deux plaques étanches qui, d'une part, assurent la distribution de l'hydrogène, côté anode et, d'autre part, de l'oxygène côté cathode. Ces plaques sont appelées des plaques bipolaires.

La membrane conductrice ionique est généralement une membrane organique contenant des groupes ioniques qui, en présence d'eau, permettent la conduction des protons produits à l'anode par oxydation de l'hydrogène.

L'épaisseur de cette membrane est comprise en général entre 50 et 150 µm et résulte d'un compromis entre la tenue mécanique et la chute ohmique. Cette membrane permet également la séparation des gaz. La résistance chimique et électrochimique de ces membranes permet, en général, un fonctionnement en pile sur des durées supérieures à 1 000 heures.

Le polymère constituant la membrane doit donc remplir un certain nombre de conditions relatives à ses propriétés mécaniques, physico-chimiques et électriques qui sont, entre autres, celles définies ci-après.

Le polymère doit tout d'abord pouvoir donner des films minces, de 50 à 100 micromètres, denses, sans défauts. Les propriétés mécaniques, module élastique, contrainte à la rupture, ductilité, doivent le rendre compatible avec les opérations d'assemblage comprenant, par exemple, un serrage entre des cadres métalliques.

Les propriétés doivent être préservées en passant de l'état sec à l'état humide.

Le polymère doit avoir une bonne stabilité thermique à l'hydrolyse et présenter une bonne résistance à la réduction et à l'oxydation jusqu'à des températures voisines de 200°C. Cette stabilité thermomécanique s'apprécie en terme de variation de conductivité ionique, et en terme de variation des propriétés mécaniques.

Le polymère doit enfin posséder une forte conductivité ionique, cette conductivité est apportée par des groupements acides forts, tels que des groupements acides phosphoriques, mais surtout sulfoniques reliés à la chaîne du polymère. De ce fait, ces polymères seront généralement définis par leur masse équivalente, c'est-à-dire par le poids de polymère en gramme par équivalent acide (ou en d'autres termes, par la capacité d'échange ionique exprimée en millimole de fonction acide par gramme de polymère).

A titre d'exemple, les meilleurs systèmes développés actuellement sont capables de fournir une puissance spécifique de 1 W.cm⁻², soit une densité de courant de 2 A.cm⁻² pour 0,5 Volts.

Depuis plusieurs décennies, il a été proposé différents types de polymères conducteurs protoniques utilisables pour constituer des membranes de pile à combustible.

On a tout d'abord mis en oeuvre des résines de type phénolique sulfonées préparées par sulfonation de produits polycondensés, tels que les polymères phénol-formaldéhyde.

Les membranes préparées avec ces produits sont peu coûteuses, mais n'ont pas une stabilité à l'hydrogène suffisante à 50-60°C pour des applications de longue durée.

On s'est ensuite tourné vers les dérivés du polystyrène sulfoné qui présentent une stabilité supérieure à celle des résines phénoliques sulfonées, mais ne peuvent être utilisés à plus de 50-60°C.

Actuellement, les performances les plus intéressantes sont obtenues à partir de polymères constituées d'une chaîne principale linéaire perfluorée et d'une chaîne latérale portant un groupement acide sulfonique.

Parmi ces polymères les plus connus, et qui sont disponibles dans le commerce, on peut citer les polymères déposés sous les marques NAFION® de la société Dupont de Nemours, ACIPLEX® de la société Asahi Chemical, ou FLEMION® et DOW® de la société Dow Chemical.

Ces polymères présentent d'excellentes propriétés électrochimiques du fait de leur conductivité protonique élevée et une bonne stabilité chimique. Leurs propriétés sont stables jusqu'à 90-100°C environ pendant plusieurs milliers d'heures. Dans de telles conditions d'utilisation, les phénomènes de vieillissement sont peu marqués. En revanche, dans l'hypothèse d'une fabrication à très grande échelle, ces polymères ne sont pas adaptés, notamment pour l'industrie automobile, du fait de leur coût très élevé, de l'ordre de 800 euros/m².

Par ailleurs, la perméabilité aux alcools, appelée phénomène de cross-over et à des températures supérieures à 100°C de ce type de polymères les exclut du champ d'application des piles directes au méthanol et fonctionnant à haute température, à savoir entre 100 et 150°C.

Récemment, la société Ballard a développé un polymère aromatique (décrit dans le brevet US 5, 602,185) connu sous le nom de BAM3G, ledit polymère étant obtenu par copolymérisation de perfluorostyrène non sulfoné avec du perfluorostyrène sulfoné. Toutefois, le coût de préparation de ce polymère reste très élevé. De plus, des pertes des propriétés thermomécaniques au-delà de températures supérieures à 100°C ont pu être observées et les propriétés physico-chimiques sont telles que ce polymère est très sensible aux alcools employés pour certaines configurations de pile à combustible.

Il subsiste donc un besoin pour un polymère conducteur protonique, qui ne présente pas les inconvénients de l'art antérieur, qui satisfasse aux conditions suivantes :
- stabilité chimique et thermomécanique au-delà de 100°C ;
- résistance aux principaux alcools employés dans les configurations DMFC (Direct Methanol Fuel Cell) des piles à combustible;
- faible coût.

L'ensemble de ces besoins est atteint par un polymère fluoré, comprenant au moins un motif répétitif de formule (I) : 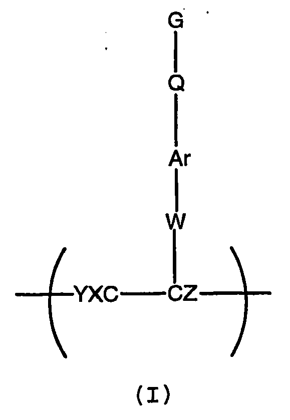 et au moins un motif répétitif de formule (II) : 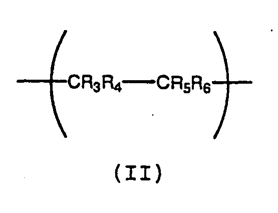 dans desquelles :
- les groupes X et Y, identiques ou différents, représentent H ou F;
- le groupe Z représente F ou un groupe alkyle perfluoré ;
- le groupe Ar représente un groupe divalent comprenant au moins un cycle aromatique carboné éventuellement substitué ;
- le groupe W représente -0-, -OCF₂-, -CF₂O-, ou - (CF₂)ₙ- avec n étant un entier allant de 1 à 10 ;
- le groupe Q représente une liaison simple ou un groupe - (CF₂)ₙ- ave n étant un entier allant de 1 à 10 ;
- le groupe G représente un groupe choisi parmi :
   - SO₂R₁, avec R₁ représentant OH, F ou Cl ; ou
   - P (=O) (OR₂)₂ avec R₂ représentant H ou un groupe alkyle éventuellement substitué ;
- les groupes R₃, R₄, R₅ et R₆, identiques ou différents, représentent H, Cl, I, un groupe alkyle éventuellement substitué ou un groupe fluoré choisi parmi :
   -F, un groupe alkyle substitué par au moins un atome de fluor,
à condition que l'un au moins des R₃, R₄, R₅ et R₆ représente un groupe fluoré, lequel polymère est un polymère greffé constitué d'une chaîne principale comprenant au moins un motif répétitif de formule (II) telle que définie ci-dessus, sur laquelle sont greffées une ou plusieurs chaînes latérales constituées d'au moins un motif répétitif de formule (I) telle que définie ci-dessus.

Selon l'invention, on entend par groupe alkyle, dans ce qui précède et ce qui suit, généralement un groupe alkyle linéaire ou ramifié de 1 à 20 atomes de carbone, cyclique de 3 à 20 atomes de carbone, par exemple, un groupe méthyle, éthyle, n-propyle, i-propyle. Ce groupe alkyle peut être substitué par un ou plusieurs substituants choisis parmi les atomes d'halogène tels que le fluor, des groupes alkyles, tels que définis ci-dessus.

Par groupe alkyle perfluoré, on entend un groupe alkyle dont tous les atomes d'hydrogène sont substitués totalement par des atomes de fluor.

Par groupe divalent comprenant au moins un cycle aromatique carboné, on entend un groupe aromatique formant pont entre le groupe W et le groupe Q. En particulier, ce groupe peut être un groupe arylène comportant de 6 à 20 atomes de carbone dont deux hydrogènes sur le cycle sont substitués pour former les liaisons avec les groupes Q et W. Ce groupe peut être, en outre, également substitué par des atomes d'halogène tels que le fluor, des groupes alkyles, tels que définis ci-dessus. A titre d'exemples, on peut citer le phénylène, le naphtalylène.

Par liaison simple, on entend, dans ce qui précède et ce qui suit, une liaison covalente simple formant un pont entre le groupe Ar et le groupe G. Dans ce cas, l'ensemble de groupes -Ar-Q-G correspond à -Ar-G.

Les polymères de l'invention correspondent donc à des copolymères comprenant un ou plusieurs motifs répétitifs de formule (I) et d'autre part, un ou plusieurs motifs répétitifs de formule (II). Il est entendu, que ces copolymères peuvent comprendre également des unités de ramification, ces unités de ramification étant dérivées des motifs de formule (I) et (II), ces unités de ramification se situant au niveau des points de ramification lorsque le polymère est un polymère greffé.

Le ou les motifs de formule (I) comporte (nt) un groupe terminal G pouvant représenter - SO₂R₁ ou -P(=O)(OR₂)₂ avec R₁ et R₂ étant tels que définis précédemment, ce groupe terminal étant à l'origine de la conduction ionique des polymères de l'invention. Dans ces motifs, on précise que les groupes W et Q peuvent être positionnés sur le groupe Ar en position ortho, para et méta, mais, avantageusement en position para.

Dans le ou les motifs de formule (II), R₃, R₄, R₅ et R₆, identiques ou différents, représentent H, Cl, I, un groupe alkyle éventuellement substitué ou un groupe fluoré tel que défini précédemment (à savoir F ou un groupe alkyle substitué par au moins un atome de fluor), la condition étant que l'un au moins des groupes R₃, R₄, R₅ et R₆ représente un groupe fluoré, à savoir selon l'invention, un atome de fluor ou un groupe alkyle substitué par au moins un atome de fluor.

Grâce à la présence simultanée de ces deux types de motifs répétitifs, les polymères de l'invention présentent une résistance mécanique à des températures supérieures à 100°C ce qui n'est pas le cas des polymères de l'art antérieur.

Ils peuvent être mis facilement sous forme de films minces d'épaisseur adéquate, par exemple, de 15 à 150 µm.

Ces polymères, grâce à la présence de fluor, sont également stables chimiquement et ne se dégradent pas, notamment lorsqu'ils sont placés dans des conditions acides. Ainsi, en milieu acide, du fait de la présence des groupements -SO₂R₁, P(=O)(OR₂), tels que définis précédemment, ces polymères vont pouvoir assurer la circulation de protons entre les différents groupes -SO₂R₁ ou P(=O)(OR₂) du polymère, sans qu'il n'y ait de dégradation du squelette dudit polymère.

De préférence, le ou les motifs répétitifs de formule (I) sont présents en quantité minoritaire par rapport à le ou les motifs répétitifs de formule (II), ce qui permet d'accéder à un bon niveau de conductivité thermique.

Ainsi, de manière préférentielle, les polymères conformes à l'invention, comprennent de 10 à 40 % en moles de motifs répétitifs de formule (I) et de 90 à 60 % en moles de motifs répétitifs de formule (II).

Le poids moléculaire du polymère selon l'invention est généralement de 10⁴ à 2.10⁶ g/mol.

Le poids moléculaire équivalent du polymère selon l'invention est généralement de 800 à 1500.

On note, que le poids moléculaire équivalent est défini par le poids de polymère en grammes par équivalent de fonctions -SO₂R₁, - P(=O)(OR₂)₂.

Le polymère selon l'invention peut être un polymère statistique, séquentiel ou alterné.

Du point de vue de la structure, le polymère est un polymère greffé.

Parmi les polymères conformes à la présente invention, on peut citer avantageusement les polymères particuliers suivants :
- le polymère comprenant comme motif conforme à la formule (I) un motif répétitif de formule (Ia) suivante : 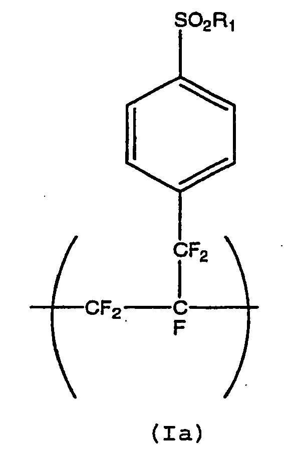 avec R₁ ayant la même définition que celle donnée précédemment et comme motif conforme à la formule (II) un motif répétitif de formule (IIa) suivante :

   -CH₂-CF₂- (IIa)
- le polymère, comprenant comme motif de formule (I) un motif répétitif de formule (Ib) suivante : 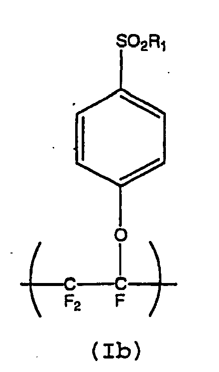 avec R₁ ayant la même définition que celle donnée précédemment et comme motif de formule (II) un motif répétitif de formule (IIa) suivante :

   -CH₂-CF₂- (IIa)

Ces polymères particuliers sont particulièrement avantageusement, car ils sont peu coûteux à réaliser, ils présentent une bonne résistance à l'oxydation, aux solvants polaires tels que les alcools, ces avantages découlant, en partie, de la présence dans ces polymères du motif répétitif - (CH₂-CF₂) - issus de la polymérisation du monomère CH₂=CF₂, intitulé fluorure de vinylène.

Ces polymères résultent d'un greffage sur un polymère de base dont le squelette est constitué d'au moins un motif répétitif de formule (II), de chaînes latérales constituées d'au moins un motif répétitif de formule (I). Une technique de greffage particulière consiste à traiter un polymère de base comprenant au moins un motif répétitif de formule (II) avec de l'ozone puis faire réagir sur le polymère traité un monomère aromatique adéquat permettant après polymérisation d'obtenir des chaînes latérales comprenant au moins un motif répétitif de formule (I). Il est entendu que les motifs permettant le greffage sont en partie modifiés et constituent des unités de ramification.

Un polymère particulier greffé, selon l'invention, est un polymère, dans lequel la chaîne principale comprend un motif répétitif de formule (IIa), telle que définie précédemment et la ou les chaînes latérales sont constituées d'un motif répétitif de formule (Ia) ou (Ib) telles que définies précédemment.

Les polymères, objet de l'invention, peuvent être obtenus par tout type de procédé.

en particulier, les polymères linéaires ou réticulés, ne faisant pas partie de l'invention, peuvent être obtenus par un procédé comprenant une étape de polymérisation d'au moins un monomère de formule suivante (III) :

XYC=CZ-W-Ar-Q-G (III)

et d'au moins un monomère de formule suivante (IV) :

R₃R₄C=CR₅R₆ (IV)

les X, Y, Z, W, Ar, Q, G, R₃, R₄, R₅ et R₆ ayant la même signification que celle donnée précédemment, ladite étape de polymérisation s'effectuant en présence d'un amorceur de radicaux.

Un amorceur de radicaux efficace dans le cadre de ce procédé peut être choisi parmi les dérivés peroxypyvalates, tels que le peroxypivalate de tertiobutyle, les dérivés peroxydes tels que le peroxyde de benzoyle.

Ce procédé peut comprendre à l'issue de l'étape de polymérisation une étape de réticulation par ajout d'un agent réticulant.

Les agents réticulants sont choisis de telle sorte à pouvoir assurer une substitution nucléophile, par exemple, de deux atomes de fluor appartenant à deux chaînes de polymère distinctes.

On peut citer comme agents réticulants des agents possédant deux fonctions nucléophiles, tels que des composés diamines tel que l'hexaméthylène de diamine.

Lorsque les R₁ représentent F ou Cl et les R₂ représentent un groupe alkyle, le procédé peut comporter en outre après l'étape de polymérisation ou éventuellement après l'étape de réticulation une étape d'hydrolyse acide permettant de transformer les R₁ en fonction OH et les R₂ en H.

L'étape de polymérisation s'effectue de préférence dans un solvant polaire aprotique, ledit solvant pouvant être choisi parmi les solvants suivants :
- le DMF : diméthylformamide ;
- l'acétonitrile
- le chloroforme ;
- le tétrahydrofurane.

De manière détaillée, on commence par mélanger un des monomères avec l'amorceur de radicaux, dans un réacteur sous atmosphère de gaz inerte. Ensuite, on introduit les différents comonomères. On chauffe le mélange réactionnel à une température allant de 40 à 100 °C pendant une durée de 1 à 5 heures, suite à quoi on ajoute un solvant apolaire aprotique. Le copolymère est isolé par recristallisation et séché. On analyse, pour finir, la structure du produit obtenu par des techniques classiques d'analyse telles que la RMN.

En ce qui concerne les polymères greffés, ceux-ci peuvent être préparés par un procédé de greffage consistant à greffer sur un polymère de base constitué, avantageusement d'une chaîne principale comprenant un ou plusieurs motifs répétitifs de formule (II), une ou plusieurs chaînes latérales constituées d'un ou plusieurs motifs répétitifs de formule (I). Pour cela, le polymère de base subit un traitement préliminaire apte à créer un ou plusieurs sites réactifs susceptibles de réagir avec le ou les monomères de formule (III) (donnant après polymérisation un ou plusieurs motifs répétitifs de formule (I)). Les sites réactifs créés permettent d'amorcer la réaction de polymérisation des monomères de formule (III) pour former les chaînes latérales. On obtient à l'issue de ce procédé un polymère comprenant une chaîne principale comprenant un ou plusieurs motifs répétitifs de formule (II) et des chaînes latérales de nature polymérique constituées d'un ou plusieurs motifs répétitifs de formule (I). Le traitement préliminaire peut servir par exemple à créer sur la chaîne principale du polymère de base un ou plusieurs sites radicalaires, à partir du ou desquelles peuvent démarrer une polymérisation du ou des monomères aromatiques de formule (III).

Le polymère de base peut être obtenu par un procédé de polymérisation radicalaire de monomère de formule (IV) ou peut être disponible commercialement.

A titre d'exemple, le polymère de base peut être du polyfluorure de vinylidène.

On fait subir à ce polymère de base, par exemple, un traitement d'ozonisation.

Ce traitement d'ozonisation va permettre de créer sur le squelette du polymère de base des sites radicalaires qui vont permettre d'amorcer la polymérisation des monomères de formule (III).

Les polymères selon l'invention, comme mentionnés précédemment, ont pour particularité de présenter une bonne stabilité chimique et mécanique notamment à des températures supérieures à 100°C.

De ce fait, la présente invention a également pour objet une membrane comprenant au moins un polymère, décrit ci-dessus.

Les membranes peuvent être préparées de manière classique, par exemple, par coulée, c'est-à-dire que le polymère est mis en solution dans un solvant adéquat, tel que de l'acétone, puis appliqué sur une surface plane, par exemple une plaque de verre, à l'aide d'un dispositif, tel qu'un applicateur à main.

Le polymère formant un film humide est ensuite séché pour former un film d'épaisseur adéquate, par exemple de 15 à 150 µm, puis décollé du substrat.

De telles membranes, notamment lorsque R₁ représente -OH, et R₂ représente H, présentent une capacité d'échange d'ions très élevée, supérieure à 0,7 méq/g, par exemple de 0,8 à 2 méq/g. De ce fait, ces membranes peuvent être utilisées notamment pour isoler les compartiments anodiques et cathodiques d'une pile à combustible pouvant fonctionner avec les systèmes suivants :
- hydrogène, alcools, tel que méthanol à l'anode ;
- oxygène, air à la cathode.

De ce fait, la présente invention a également pour objet un dispositif de pile à combustible comprenant une ou plusieurs membranes comprenant au moins des polymères selon l'invention.

Pour préparer un tel dispositif, la membrane est placée entre deux électrodes, par exemple, en tissu de carbone, éventuellement platiné, et imprégnées par exemple par du polymère, selon l'invention. L'ensemble est pressé par chauffage.

Cet ensemble est ensuite inséré entre deux plaques (par exemple, en graphite, appelées plaques bipolaires, qui assurent la distribution des gaz et la conductivité électrique).

L'invention va maintenant être décrite, en référence aux exemples suivants.

### EXPOSE DETAILLE DE L'INVENTION.

### Exemple 1 (ne faisant pas partie de l'invention)

L'exemple 1 illustre la préparation d'un polymère selon l'invention obtenu par copolymérisation du monomère aliphatique fluorure de vinylidène de formule :

CH₂=CF₂

et du monomère aromatique de formule : 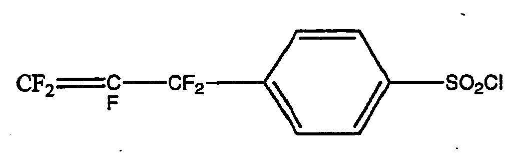 afin d'obtenir un polymère linéaire constitué d'un motif répétitif de formule (Ia) avec R₁= Cl et d'un motif répétitif de formule (IIa), telles que décrites ci-dessus.

Dans un réacteur en Hastelloy de 160 mL, équipé de deux vannes, d'un disque de sécurité et d'un manomètre, sont introduits 12,8 g (50 mmoles) de monomère aromatique tel que défini précédemment, 0,61 g de peroxypyvalate de tertiobutyle et 55 g d'acétonitrile. Le réacteur est fermé, mis sous vide et refroidi à -80°C, puis sont introduits 13,3 g (0,208 mol) de fluorure de vinylidène. Le réacteur est laissé revenir à température ambiante puis est placé dans la glace. Ensuite le réacteur est chauffé à 75°C dans un bain d'huile pendant 15 heures. Après refroidissement à température ambiante puis dans la glace, le réacteur est ramené à pression ambiante. L'acétonitrile est partiellement évaporée, puis le copolymère obtenu est précipité, dans un erlenmeyer par addition lente, par goutte à goutte, sous agitation, de 200 mL de pentane froid. Le copolymère colle aux parois de l'erlenmeyer et après décantation, séparation et séchage sous vide à 80°C jusqu'à poids constant, 13 g de produit visqueux orangé sont obtenus. Le rendement est de 50 %. Les déplacements chimiques, en RMN, des groupements fluorés des copolymères confirment l'existence de polymères comprenant des motifs répétitifs de formule (Ia) avec R₁=Cl et (IIa).

Après hydrolyse en milieu acide fort pour transformer Cl en -OH, un copolymère de capacité d'échange ionique proche de 1,8 méq/g est obtenu. On précise que la capacité d'échange ionique a été mesurée par dosage acido-basique.

### EXEMPLE 2 (ne faisant pas partie de l'invention)

L'exemple 2 illustre la préparation d'un polymère conforme à la présente invention obtenu par polymérisation des trois monomères suivants :
- le fluorure de vinylidène : CH₂=CF₂
- l'hexafluoropropène (HFP) de formule :

   F₂C=CF(CF₃)
- le monomère aromatique de formule : 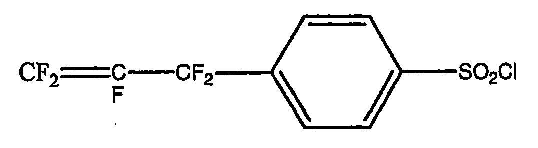
moyennant quoi on obtient un polymère constitué de motifs répétitifs de formule (Ia) avec R₁=Cl, (IIa) et (IIb).

Dans un réacteur en Hastelloy de 160 mL, équipé de deux vannes, d'un disque de sécurité et d'un manomètre, sont introduits 8,5 g (33 mmoles) de monomère aromatique tel que défini précédemment, 0,77 g de peroxypyvalate de tertiobutyle et 55 g d'acétonitrile. Le réacteur est fermé, mis sous vide et refroidi à -80°C, puis sont introduits 13,3 g (89 mmol) d'hexafluoropropène et 13,3 g (0,208 mol) de fluorure de vinylidène. Le réacteur est laissé revenir à température ambiante puis est placé dans la glace. Ensuite le réacteur est chauffé à 75°C dans un bain d'huile pendant 15 heures. Après refroidissement à température ambiante puis dans la glace, le réacteur est ramené à pression ambiante. L'acétonitrile est partiellement évaporée, puis le copolymère obtenu est précipité, dans un erlenmeyer par addition lente, par goutte à goutte, sous agitation, de 200 mL de pentane froid. Le copolymère colle aux parois de l'erlenmeyer et après décantation, séparation et séchage sous vide à 80°C jusqu'à poids constant, 23,3 g de produit visqueux orangé sont obtenus. Le rendement est de 68 %. Les déplacements chimiques, en RMN, des groupements fluorés des copolymères confirment l'existence de polymères comprenant des motifs répétitifs de formule (Ia) avec R₁= Cl, (IIa) et (IIb).

Après hydrolyse en milieu acide fort pour transformer Cl en OH, un copolymère de capacité d'échange ionique proche de 0,9 méq/g est obtenu. On précise que la capacité d'échange ionique a été mesurée par dosage acido-basique.

### EXEMPLE 3 (ne faisant pas partie de l'invention)

L'exemple 3 illustre la préparation d'un polymère selon l'invention obtenu par copolymérisation du monomère aliphatique fluorure de vinylidène de formule :

CH₂=CF₂

et du monomère aromatique parachlorosulfonyl-α,β,β-trifluoroxystyrène de formule : 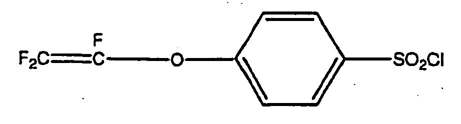 moyennnant quoi on obtient un polymère constitué de motifs répétitifs de formule (Ib) avec R₁=Cl, (IIa) .

Dans un réacteur en Hastelloy de 160 mL, équipé de deux vannes, d'un disque de sécurité et d'un manomètre, sont introduits 10 g (37 mmoles) de monomère parachlorosulfonyl-α,β,β-trifluoroxystyrène, 0,56 g de peroxypyvalate de tertiobutyle et 55 g d'acétonitrile. Le réacteur est fermé, mis sous vide et refroidi à - 80°C, puis sont introduits 13,3 g (0,208 mol) de fluorure de vinylidène. Le réacteur est laissé revenir à température ambiante puis est placé dans la glace. Ensuite le réacteur est chauffé à 75°C dans un bain d'huile pendant 15 heures. Après refroidissement à température ambiante puis dans la glace, le réacteur est ramené à pression ambiante. L'acétonitrile est partiellement évaporée, puis le copolymère obtenu est précipité, dans un erlenmeyer par addition lente, par goutte à goutte, sous agitation, de 200 mL de pentane froid. Le copolymère colle aux parois de l'erlenmeyer et après décantation, séparation et séchage sous vide à 80°C jusqu'à poids constant, 17,7 g de produit visqueux orangé sont obtenus. Le rendement est de 76 %. (Ib), (IIa).

Après hydrolyse en milieu acide fort pour transformer Cl en -OH, un copolymère de capacité d'échange ionique proche de 1,6 méq/g est obtenu. On précise que la capacité d'échange ionique a été mesurée par dosage acido-basique.

### EXEMPLE 4.

L'exemple 4 propose un exemple de préparation d'un polymère greffé dont la chaîne principale est constituée d'un motif répétitif aliphatique fluoré (motif IIa) et les chaînes latérales sont constituées d'un motif répétitif aromatique fluoré (motif Ia) résultant d'une homopolymérisation.

Le polymère de base, sur le squelette duquel sont fixés les greffons, est le polyfluorure de vinylidène (PVDF). Ce polymère subit un traitement d'ozonisation, ce traitement permettant de former des fonctions réactives.

### 1) Ozonisation du PVDF.

Dans un réacteur en verre, sont introduits 60 g de PVDF et fluidisés par un courant d'air. Une fois cette opération effectuée, on fait circuler un courant d'ozone (produit grâce à un générateur d'ozone à arc électrique). Après 1h30 d'ozonisation, une opération d'élimination de l'ozone résiduelle présente dans le réacteur est réalisée en faisant circuler un courant d'air (pendant 2 heures).

### 2) Greffage de chaînes latérales constituées du motif (Ia) sur le PVDF ozonisé.

Dans un monocol, surmonté d'une colonne réfrigérante, sont introduits 2,10 g de PVDF ozonisé, 1,08 g du monomère aromatique de l'exemple 1 (4 mmol) et 20 g de diméthylformamide. Le milieu réactionnel est agité et chauffé pendant 16 heures à 110°C. La couleur du milieu passe de l'incolore en début de réaction au jaune en fin de manipulation. Le produit est précipité dans 200 g environ de pentane froid puis filtré et séché à la pompe à vide. 4 g de produit est récupéré après séchage.

Après hydrolyse en milieu acide fort pour transformer Cl en OH, un copolymère de capacité d'échange ionique proche de 2 méq/g est obtenu. On précise que la capacité d'échange ionique a été mesurée par dosage acido-basique.

### EXEMPLE 5.

L'exemple 5 propose un exemple de préparation d'un polymère greffé dont le squelette est constitué d'un motif répétitif aliphatique fluoré (IIa) et les chaînes latérales sont constituées d'un motif répétitif aromatique fluoré (motif Ib) résultant de la polymérisation du (para-chlorosulfonyl-α,β,β-trifluoroxystyrène).

Le polymère de base, sur le squelette duquel sont fixés les greffons, est le polyfluorure de vinylidène (PVDF). Ce polymère subit un traitement d'ozonisation, ce traitement permettant de former des fonctions réactives, tel que dans l'exemple 4.

Puis dans un monocol, surmonté d'une colonne réfrigérante, sont introduits 2,10 g de PVDF ozonisé, 1,08 g (11,3 mmol) de monomère (para-chlorosulfonyl-α,β,β-trifluoroxystyrène) et 20 g de diméthylformamide. Le milieu réactionnel est agité et chauffé pendant 16 heures à 110°C. La couleur du milieu passe de l'incolore en début de réaction au jaune en fin de manipulation. Le produit est précipité dans 200 g environ de pentane et filtré et séché à la pompe à vide. 4 g de produit est récupéré après séchage.

Après hydrolyse en milieu acide fort pour transformer -Cl en -OH, un copolymère de capacité d'échange ionique proche de 2 méq/g est obtenu. On précise que la capacité d'échange ionique a été mesurée par dosage acido-basique.

### EXEMPLE 6 (ne faisant pas partie de l'invention)

Cet exemple propose la préparation d'une membrane échangeuse de protons pour pile à combustible à partir du copolymère préparé selon l'exemple 3.

Dans un bicol surmonté d'une colonne réfrigérante, sont introduits 5 g du copolymère (après hydrolyse acide) préparé selon l'exemple 3, 0,5 g de MgO, 1 g d'hexaméthylène diamine (8,6 mmol) et 25 g d'acétone. Le milieu réactionnel est agité et chauffé à reflux pendant 1 heure. La suspension ainsi obtenue est déposée de façon homogène sur une plaque de verre revêtue d'un film de polytétrafluoroéthylène (PTFE) puis l'acétone est évaporée. Le film ainsi préparé est décollé, séché à l'étuve (100°C, 1 heure).

## Revendications

1. Polymère fluoré, comprenant au moins un motif répétitif de formule (I) : 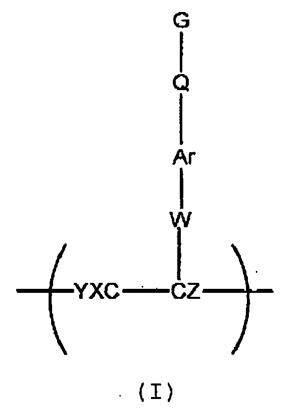 et au moins un motif répétitif de formule (II) : 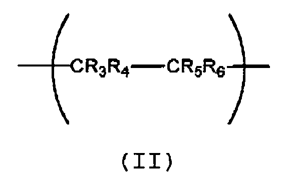 dans desquelles
- les groupes X et Y, identiques ou différents, représentent H ou F;
- le groupe Z représente F ou un groupe alkyle perfluoré ;
- le groupe Ar représente un groupe divalent comprenant au moins un cycle aromatique carboné éventuellement substitué ;
- le groupe W représente -O-; -OCF₂-, -CF₂O-, ou - (CF₂)ₙ- avec n étant un entier allant de 1 à 10 ;
- le groupe Q représente une liaison simple ou un groupe -(CF₂)ₙ- ave n étant un entier allant de 1 à 10 ;
- le groupe G représente un groupe choisi parmi :
-SO₂R₁, avec R₁ représentant OH, F ou Cl ; ou
-P(=O)(OR₂)₂ avec R₂ représentant H ou un groupe alkyle éventuellement substitué ;
- les groupes R₃, R₄, R₅ et R₆, identiques ou différents, représentent H, Cl, I, un groupe alkyle éventuellement substitué ou un groupe fluoré choisi parmi :
- F, un groupe alkyle substitué par au moins un atome de fluor,
à condition que l'un au moins des R₃, R₄, R₅ et R₆ représente un groupe fluoré, lequel polymère est un polymère greffé constitué d'une chaîne principale comprenant au moins un motif répétitif de formule (II) telle que définie ci-dessus, sur laquelle sont greffées une ou plusieurs chaînes latérales constituées d'au moins un motif répétitif de formule (I) telle que définie ci-dessus.

2. Polymère selon la revendication 1, dans lequel le poids moléculaire est de 10⁴ à 2.10⁶ g/mol.

3. Polymère selon la revendication 1 ou 2, dans lequel le poids moléculaire équivalent du polymère selon l'invention est de 800 à 1500.

4. Polymère selon l'une quelconque des revendications 1 à 3, dans lequel le ou les motifs répétitifs de formule (I) sont présents en quantité minoritaire par rapport à le ou les motifs répétitifs de formule (II).

5. Polymère selon la revendication 4, comprenant de 10 à 40 % en moles du ou des motifs répétitifs de formule (I) et de 90 à 60 % en moles du ou des motifs répétitifs de formule (II).

6. Polymère selon l'une quelconque des revendications 1 à 5, qui est un polymère statistique, séquentiel ou alterné.

7. Polymère selon l'une quelconque des revendications 1 à 6, dans lequel la chaîne principale comprend un motif répétitif de formule (IIa):
-CH₂-CF₂- (IIa)
et la ou les chaînes latérales sont constituées d'un motif répétitif de formule (Ia) ou (Ib) suivantes :

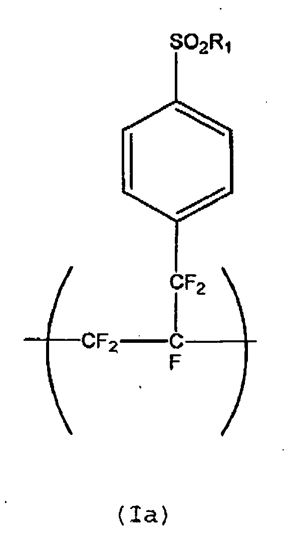

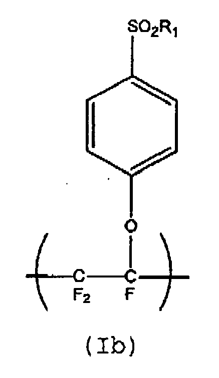

8. Membrane comprenant au moins un polymère selon l'une quelconque des revendications 1 à 7.

9. Dispositif de pile à combustible comprenant au moins une membrane selon la revendication 8.

## Claims

1. Fluorinated polymer, comprising at least one repeating unit of formula (I): 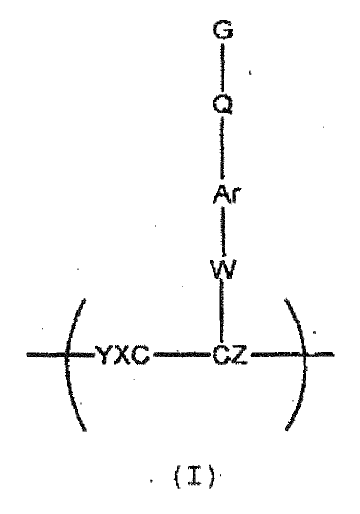 and at least one repeating unit of formula (II): 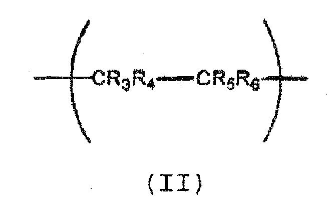 in which:
- the X and Y groups, which may be identical or different, represent H or F;
- the Z group represents F or a perfluorinated alkyl group;
- the Ar group represents a divalent group comprising at least one optionally substituted carbonaceous aromatic ring;
- the W group represents -O-, -OCF₂-, -CF₂O- or
- (CF₂)ₙ- with n being an integer ranging from 1 to 10;
- the Q group represents a single bond or a -(CF₂)ₙ-group with n being an integer ranging from 1 to 10;
- the G group represents a group chosen from:
- -SO₂R₁, with R₁ representing OH, F or Cl; or
- P(=O)(OR₂)₂ with R₂ representing H or an optionally substituted alkyl group;
- the R₃, R₄, R₅ and R₆ groups, which may be identical or different, represent H, Cl, I, an optionally substituted alkyl group or a fluorinated group chosen from:
- F, and an alkyl group substituted with at least one fluorine atom,
on the condition that at least one of R₃, R₄, R₅ and R₆ represents a fluorinated group, which polymer is a grafted polymer constituted of a main chain comprising at least one repeating unit of formula (II) as defined above, onto which one or more side chains constituted of at least one repeating unit of formula (I) as defined above is (are) grafted.

2. Polymer according to Claim 1, in which the molecular weight is from 10⁴ to 2 × 10⁶ g/mol.

3. Polymer according to Claim 1 or 2, in which the equivalent molecular weight of the polymer according to the invention is from 800 to 1500.

4. Polymer according to any one of Claims 1 to 3, in which the repeating unit(s) of formula (I) is (are) present in a minor amount relative to the repeating unit(s) of formula (II).

5. Polymer according to Claim 4, comprising from 10 to 40 mol% of the repeating unit(s) of formula (I) and from 90 to 60 mol% of the repeating unit(s) of formula (II).

6. Polymer according to any one of Claims 1 to 5, which is a random, block or alternating polymer.

7. Polymer according to any one of Claims 1 to 6, in which the main chain comprises a repeating unit of formula (IIa):
-CH₂-CF₂- (IIa)
and the side chain(s) is (are) constituted of a repeating unit of formula (Ia) or (Ib) below:

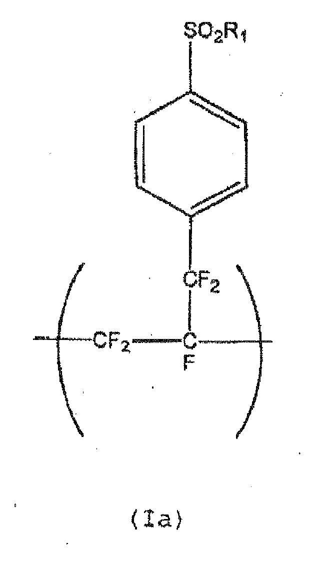

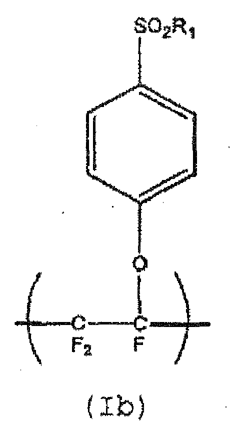

8. Membrane comprising at least one polymer according to any one of Claims 1 to 7.

9. Fuel cell device comprising at least one membrane according to Claim 8.

## Patentansprüche

1. Fluorpolymer umfassend wenigstens eine sich wiederholende Struktureinheit der Formel (I): 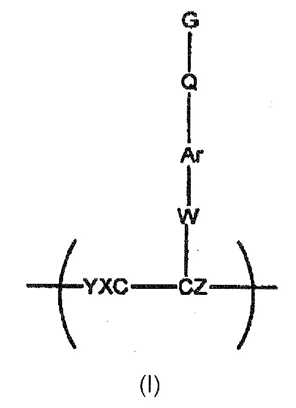 und wenigstens eine sich wiederholende Struktureinheit der Formel (II): 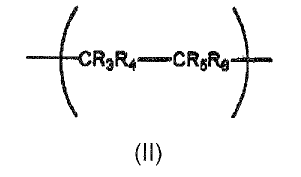 worin:
- die Gruppen X und Y, die gleich oder verschieden sind, H oder F darstellen;
- die Gruppe Z F oder eine perfluorierte Alkylgruppe darstellt;
- die Gruppe Ar eine zweiwertige Gruppe darstellt, die wenigstens ein gegebenenfalls substituiertes aromatisches Kohlenstoffringsystem umfasst;
- die Gruppe W -O-, -OCF₂-, -CF₂O- oder -(CF₂)ₙ- darstellt, wobei n eine ganze Zahl von 1 bis 10 ist;
- die Gruppe Q eine Einfachbindung oder eine Gruppe -(CF₂)ₙ darstellt, wobei n eine ganze Zahl von 1 bis 10 ist;
- die Gruppe G eine Gruppe darstellt, die aus Folgendem ausgewählt ist:
- SO₂R₁, wobei R₁ OH, F oder Cl darstellt, oder
- P(=O)(OR₂)₂, wobei R₂ H oder eine gegebenenfalls substituierte Alkylgruppe darstellt;
- die Gruppen R₃, R₄, R₅ oder R₆, die gleich oder verschieden sind, H, Cl, l, eine gegebenenfalls substituierte Alkylgruppe oder eine fluorhaltige Gruppe darstellen, die aus Folgendem ausgewählt ist:
- F, einer durch wenigstens ein Fluoratom substituierten Alkylgruppe, mit der Maßgabe, dass wenigstens eines von R₃, R₄, R₅ oder R₆ eine fluorhaltige Gruppe darstellt und das Polymer ein Pfropfpolymer ist, das aus einer Hauptkette besteht, die wenigstens eine sich wiederholende Struktureinheit der vorstehend definierten Formel (II) umfasst, auf die eine oder mehr Seitenketten gepfropft sind, die aus wenigstens einer sich wiederholenden Struktureinheit der vorstehend definierten Formel (I) bestehen.

2. Polymer gemäß Anspruch 1, dessen Molekulargewicht 10⁴ bis 2.10⁶ g/Mol beträgt.

3. Polymer gemäß Anspruch 1 oder 2, wobei das Äquivalentmolekulargewicht des erfindungsgemäßen Polymers 800 bis 1500 ist.

4. Polymer gemäß einem der Ansprüche 1 bis 3, wobei die sich wiederholende Struktureinheit oder sich wiederholenden Struktureinheiten der Formel (I) in untergeordneter Menge bezüglich der sich wiederholenden Struktureinheit oder sich wiederholenden Struktureinheiten der Formel (II) vorliegen.

5. Polymer gemäß Anspruch 4, das 10 bis 40 Mol-% der sich wiederholenden Struktureinheit oder sich wiederholenden Struktureinheiten der Formel (I) und 90 bis 60 Mol-% der sich wiederholenden Struktureinheit oder sich wiederholenden Struktureinheiten der Formel (II) umfasst.

6. Polymer gemäß einem der Ansprüche 1 bis 5, das ein statistisches, sequentielles oder alternierendes Polymer ist.

7. Polymer gemäß einem der Ansprüche 1 bis 6, bei dem die Hauptkette eine sich wiederholende Struktureinheit der Formel (IIa) umfasst:
-CH₂-CF₂- (IIa)
und die Seitenkette oder Seitenketten aus einer sich wiederholenden Struktureinheit der folgenden Formel (Ia) oder (Ib) bestehen:

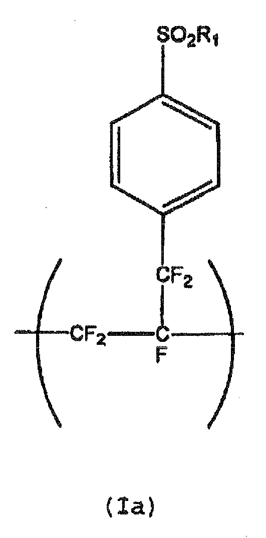

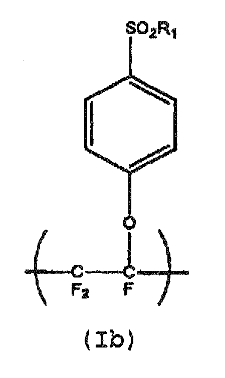

8. Membran umfassend wenigstens ein Polymer gemäß einem der Ansprüche 1 bis 7.

9. Brennstoffzellensystem umfassend wenigstens eine Membran gemäß Anspruch 8.
